# EUROPEAN PATENT APPLICATION

(11) **EP 3 756 465 A1**
(43) Date of publication of application: **30.12.2020**
(21) Application number: 19182056.2
(22) Date of filing: 24.06.2019
(51) Int. Cl.: A01N 59/16, C09D 5/14, B01J 13/02, H01G 9/20, A01P 1/00

(54) **AN ANTIMICROBIAL COATING COMPOSITION**

(71) Applicant: Framtix Holdings AB, 201 22 Malmö (SE)
(72) Inventor: DHOLIYA, Krunal Maheshkumar, Surat 395004 Gujarat (IN)
(74) Representative: Hansson Thyresson AB

(57) **Abstract**

An antimicrobial coating composition comprising a nanoparticle composite having a core and at least one shell, wherein the core comprises a silver nanoparticle having an antimicrobial action. The at least one shell is formed by a doped semiconductor providing a photocatalytic action and increasing the stability of silver nanoparticle core by controlling the releasing of Ag ions. The nanoparticle composite comprises a nanoparticle of a noble metal providing surface plasmon under the presence of electromagnetic radiation.

## Description

### TECHNICAL FIELD

The invention relates to an antimicrobial coating composition comprising a nanoparticle composite having a core and at least one shell.

### BACKGROUND

Humans are exposed daily to millions of microorganisms such as bacteria, fungi and spores. They are found on virtually every surface, such as on foods, in air-conditioning and ventilation systems or even on toothbrushes. Many of these microorganisms are useful or even necessary. Nevertheless, in addition to the more harmless representatives, there are also bacteria, fungi and spores which cause disease or are even deadly.

Daily dealings with other people and contact with articles which others have used, such as door handles, sanitary installations, light switches or faucets, may result in the transmission of microorganisms. Particularly in public buildings and especially in hospitals there is increased exposure to this risk. Besides the risks in terms of harm to health, microorganisms (e.g., mold fungi in the sanitary sector) also cause considerable material damage.

It is possible to achieve oxidative degradation of organic compounds and/or microbial cells. In some "advanced oxidation processes", heterogeneous photocatalysis has appeared as an emerging destructive technology leading to the total mineralization of most organic contaminants. The photocatalytic method is built on the reactive properties of electron-hole pairs generated in semiconductor particles under illumination by light whose energy is greater than the semiconductor band gap; these electrons and holes can recombine or reach the particle surface and react with species in solution with suitable redox potential. Among various semiconductors, Titanium (IV) oxide (TiO₂) is a catalyst with many advantages including long-term stability, and non-toxic. TiO₂ is also easy and safe to produce. The photocatalytic action generates, in presence of light, oxidation-reduction power and act on organic compound and/or microbial cells in the vicinity.

In some applications it is desirable to decrease the energy band gap or to establish energy levels inside the forbidden band gap and reduce the recombination processes by introducing traps for electrons (e⁻) and/or holes (h⁺). The valance band (VB) and conduction band (CB) of TiO₂ consist of O 2p and Ti 3d orbitals, respectively and their band gap (forbidden band) is ∼3.0-3.2 eV. Photo-irradiation (*hv*>3.2eV) of the TiO₂ photocatalyst leads to band gap excitation resulting in charge separation of electrons in the CB and holes in the VB.

Usually, the photocatalytic activity of TiO₂ is strongly dependent on its phase structure, crystallite size, specific surface areas, and pore structure. Titanium oxide exist in nature in two tetragonal form, rutile and anatase also in a rhombic form called brookite. Brookite is extremely difficult to synthesize in the laboratory but both anatase rutile is can be readily prepared. Anatase form shows highest photocatalytic action. Crystallization is often performed by calcination at high temperature above 400 °C. But it is possible to crystallized using hydrothermal treatment, low temperature crystallization with water. In this example there was used 120 °C hydrothermal heat, which was equally efficient to particle generated at 600 °C.

### SUMMARY OF THE INVENTION

In one aspect of the invention there is provided an antimicrobial coating composition comprising a nanoparticle composite having a core and at least one shell, wherein the core comprises a silver nanoparticle having an antimicrobial action; the at least one shell is formed by a doped semiconductor providing a photocatalytic action and increasing the stability of silver nanoparticle core by controlling the releasing of Ag ions; the nanoparticle composite comprises a nanoparticle of a noble metal providing surface plasmon under the presence of electromagnetic radiation.

The present invention relates to an antimicrobial coating composition with a nanoparticle (NP) composite comprising
a silver nanoparticle core with a shell of TiO₂, wherein the shell is doped with at least one dopant selected from the group consisting of copper and
aluminum, and
a gold nanoparticle, wherein the shell of TiO₂ increases stability of silver nanoparticle core by effective control of releasing Ag ions as compared to naked silver nanoparticle.

The core comprises nanoscale particles of silver having a particle size <100 nm and an antimicrobial action or having so-called oligodynamic action where silver ions released from the core causes cell damage and cell death. The shell is formed by at least one substance having a photocatalytic activity, such as an inorganic material having semi-conductor properties. Semiconductor materials of this kind with band gaps preferably between 2 eV and 5 eV are able, as a result of photo excitation, to form electron-hole pairs. The electrons formed migrate to the surface of the core particle where an oxidation/reduction reaction can take place to provide a degradation of organic compounds and/or microbes.

As set out above a preferred semiconductor material is titanium oxide, TiO₂. Titanium (IV) oxide can be used as antimicrobial agent because of strong oxidation and reduction activity generated from photo excitement. TiO₂ shows relatively high reactivity and chemical stability under ultraviolet light (<387 nm). The shell of TiO₂ also increases the stability of the core silver nanoparticle by effectively controlling the release of silver ions from a bare silver nanoparticle.

It could be emphasized, that the size of the core particles, at <100 nm, is of great importance for the effects which occur in accordance with the invention. The core particles used in accordance with the invention are located in the narrow nanoscale range, as defined by the indication <100 nm.

The performance of a photocatalyst is improved by depositing or incorporating metal ion or non-metal dopants into the TiO₂. Doping techniques are applied in photocatalysis to overcome limitations of TiO₂ such as wide-band gap, ineffectiveness of photocatalysis under visible light, separation of e- and hole+ pairs, recombination of e- and hole+ pairs, and thermal instability. Most of the dopants have the potential to increase the photocatalytic efficiency of nano-doped- TiO₂. To broaden the effective range of light sensitivity of photocatalyst from the ultra-violet (UV) region to the visible light region, dopants can modify the electronic structure of nano- TiO₂.

Dopants create a charge space carrier region on the surface of TiO₂ and prohibits the recombination of the photogenerated electron-hole pairs, which in turn accelerate the formation of hydroxyl radical and thus enhance the rate of photocatalytic process. In addition to this, dopants can act as active site for the adsorption of pollutants and increase the rate of photodegradation. The dopant is a transition metal, a transition metal oxide, a transition metal hydroxide or a multivalent ion of transition element like Cu or Al in the concentration of 0.1-1 % of TiO₂.

The photocatalytic action from the shell of TiO₂ can be further improved by adding a noble metal nanoparticle, such as gold, to the nanoparticle composite to provide a plasmonic nanoparticle (PNP). Various plasmonic photocatalytic composites exhibit significantly enhanced photocatalytic activities. In these composites, the PNPs efficiently absorb visible light through localized surface plasmon resonance (LSPR) and convert it into holes and electrons in the nearby semiconductors.

The LSPR of PNPs can include many plasmon modes, such as the dipole plasmon mode, quadrupole mode and considerably higher plasmon modes. For photocatalytic applications, the most relevant mode is the dipole plasmon resonance. The dipole plasmon mode describes the collective oscillation of the conduction electrons in PNPs in response to the incident light. Upon light irradiation, the electric field will displace the conduction electrons relative to the nuclei, inducing a large electric dipole. Simultaneously, a restoring force arises because of the Coulomb attraction between electrons and nuclei, which results in resonant oscillation of the conduction electrons at a certain frequency. The LSPR generally occurs when the PNPs are considerably smaller than the wavelength of the incident light.

By providing a silver nanoparticle in the centre a plasmon effect will be generated in presence of light. The silver nanoparticle also possesses oligodynamic properties. By including a gold nanoparticle in the nanoparticle composite, an enhanced effect of surface plasmon under the presence of light will be provided. By this effect, conduction electrons will oscillate in the phase with the electric field of electromagnetic rays and an electron cloud will be generated.

The present invention is a photocatalyst which exhibit high reactivity under broad spectrum of light, UV range as well as under visible light (>400 nm). Excited-state electrons and holes which recombine and dissipate the input energy as heat, get trapped in metastable surface states, or react with electron donors and electron acceptors adsorbed on the semiconductor surface or within the surrounding electrical double layer of the charged particles.

Additional advantages will be set forth in part in the description which follows or may be learned by practice. The advantages will be realized and attained by means of the elements and combinations particularly pointed out in the appended claims.

### BRIEF DESCRIPTION OF THE DRAWINGS

The accompanying drawing, which are incorporated in and constitute a part of this specification, illustrate embodiments and together with the description, serve to explain the principles of the methods and systems.

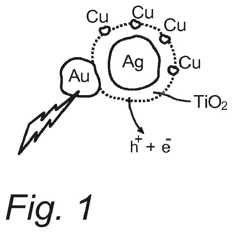

- Fig. 1: is a schematic view of an antimicrobial coating composition in accordance with the invention.

### EXAMPLES

In one embodiment of the invention, the antimicrobial coating composition is formed by silver-doped TiO₂ in the form core/shell nanoparticles (NPs) with a silver-core and a TiO₂-shell (Ag@ TiO₂). The core/shell morphology of such a nanoparticle composite gives several advantages including well-defined and higher stability of silver nanoparticles (due to its encapsulated state inside TiO2 shell). The mole ratio between TiO₂:Ag is important while preparing an Ag@ TiO₂ core-shell nanoparticle. At lower molar ratio an improved core shell particle can be obtained compared to a higher ratio. The silver nanoparticle core has an average diameter from 1 nm to 100 nm, and in some embodiments from 10 nm to 100 nm.

The silver nanoparticle was prepared in the presence of β-D-Glucose as reducing agent and PEG (polyethylene glycol) as a dispersion agent and water as a solvent. After the dispersion of silver ions in a PEG aqueous solution matrix, PEG reacted with the Ag to form a PEG complex [Ag(PEG)]+, which reacted with β-D-glucose to form [Ag(PEG)] due to the reduction of silver ions through the oxidation of glucose to gluconic acid. There is an increase of NPs size depending on reaction time. The Ag NPs size could vary substantially, from about 10 nm at a 3 h reaction time to about 25 nm at 48 h reaction time.

After preparation of nanoparticles, these particles were added to TiO₂ sol in different proportions 2.5%, 5%, 7.5%, 10%, 20%, molar ratio. Hydrothermal treatment at 120 °C for 4 hours helped in forming proper crystallized form. The nanoparticle was added to a solvent having gold particle equivalent to silver molar ratio. The different proportions initially resulted in nearly equal efficiency, except using 20%. With time this efficiency is reduced in the case of the lower percentage of 2.5% while a percentage between 5% and 10% gives better result in antimicrobial action.

A drawback of using TiO₂ as a photocatalyst is that its band gap lies in the near-UV range of the electromagnetic spectrum: 3.2 eV for the anatase phase. As a result, only UV light can create electron-hole pairs and initiate the photocatalytic process.

Doping is the common strategy used to improve the photocatalytic activity by introducing impurities into the TiO₂ matrix. The surface-doped ions play a key role in the kinetics of interfacial charge transfer. They are able to interact with both charge carriers and reactant to mediate charge transfer.

Various transitional element multivalent ions can be used as dopant i.e. Cu++, AI+++, Fe+++, Mn+7, Ni++. All these ions are very well-known electric conductors. They can accept an electron due to its ionic charge present on it. Using Cu++ as dopant resulted in a very favourable for antimicrobial action. Various Cu++ molar concentration was used. Source of Cu++ used is at 1%, 0.5%, 0.25%, 0.1% mole with Titanium. CuO at 0.25% provided very good photocatalytic action based on methylthioninium chloride degradation test.

A gold nanoparticle absorbs visible light and will improve photocatalysis response in a broader light spectrum. This is a result of the gold nanoparticle showing good surface plasmon under the presence of electromagnetic rays. Conduction electrons will oscillate in the phase with the electric field of electromagnetic rays.

### PREPARATION METHODS

### Step 1, Synthesis of Nano Silver

Solution A: 1.0 M Silver (1) nitrate (AgNO₃) were prepared in double distilled water.
Solution B: 1% Polyethylene Glycol (PEG) solution in double distilled water
Solution C: 1.0 M D glucose in Double distilled water

10 mL of solution A was mixed with 200 mL of solution B and stirred for 20 min at high speed. A transparent solution is generated. In this mixture, 20 mL of solution C was added and stirred for another 20 minutes. This mixture is heated at 80 °C under stirring condition until pale yellow colour appears.

Stop the reaction immediately by lowing temperature below 15 °C. Store colloidal suspension in dark bottle to avoid any photoactivity.

### Step 2, Synthesis of Core-shell particle

Solution D: Colloidal Nano silver particle generated in step 1 (used for generating Ag@ TiO₂ core shell)
Solution E: 1.0 M titanium isopropoxide (TTIP) in 2-propanol
Solution D was stirred for 10 min at high speed.
Solution E was added dropwise to solution D.

Lactic acid was added to make pH 2-3.

The yellow-white precipitate was generated. Stirred for more 4 hours at 60 °C. Transparent sol was generated. This sol was treated under hydrothermal environment, 120 °C for 4 hours. This particle suspension can be used directly or dry it out at 80 °C under vacuum condition.

### Step 3, Addition of Dopant (surface doping)

Solution F: 30% hydrogen peroxide (H₂O₂) solution
Solution G: 1 mM Copper oxide (CuO) in 1:1 double distilled water: 2 Propanol
Ag@TiO2 core-shell synthesised in step 2 is doped with Cu++ dopant.

1 mM of powder of step 3 is prepared in 100 mL solution G.

1 mL of Solution F was added.

Well-dispersed under ultrasonication of the solution.

Light stirred for an hour.

High speed stirred for an hour.

Calcination process for 600 °C for 2 hours.

Nanoparticle 1 (surface doped core-shell particle)

### Step 4, Synthesis of Nano Gold particle

Solution H: Aqua regia (1:3 solution of concentration HNO₃:HCl)
Solution I: 38 mM solution of Tri-sodium citrate in solution B
Solution J: 100 mM Hydrogen tetrachloroaurate trihydrate
   1. 1.0 g of gold was put in 500 mL flask and slowly added 100 mL of solution H.
   2. Allowed it to stand for 60 min at room temperature. When the dissolution of gold slows down, the temperature was gradually increased up to boiling.
   3. Once metallic gold is completely dissolved, the solution is continuously heated until it was concentrated to 50 mL
   4. HCI was slowly added to the hot solution, until brown vapours were completely eliminated.
   5. The final solution was in 100 mM in strength.

20 mL of 1 mM solution J was added to 100 mL flask.

The solution was heated to boiling and then add 2 mL of solution I (1:3.8 molar ratio).

After some time, deep wine-red sol was obtained.

No further change of colour upon prolonged boiling was observed.

The solution was cooled down to room temperature.

Nano gold colloidal suspension is ready.

Store it in dark bottle to avoid photo reaction.

Nanoparticle 2 (Plasmonic Nanoparticle)

### Step 5, Synthesis of TiO2 Sol

88g of TTIP was added dropped wise in 2-Propanol under starring condition. Starred for 60 min at high speed temperature should not increase beyond 50 °C. Lactic acid was added up to pH was drop to 2.

Starred for another 60 min at high speed.

Stand for 6-8 hours until clear sol is generated.

Transparent sol is generated.

### Final Solution

Nanoparticle 1 and Nanoparticle 2 was mixed 1:2 proportion.

Sonicated this mixture.

500 mL of this mixture is added to 500 mL of TiO₂ sol.

In a process for the preparation of the coating composition a solvent used for preparing the solution or suspension will preferably be removed again after the shell has been applied. The coating material obtainable by the process of the invention can, be further processed and used in a variety of ways: for example, by spraying, dipping or spin coating. Depending on the base (binder) used for the composition the finishing of the coating is accomplished in different ways. The binder can be organ silane, PU, poly vinyl alcohol, acrylic coating or other material with corresponding properties.

The coating composition can be provided in a carrier compound that can be water and/or solvent which has a lower boiling point than water. It will then easily evaporate at room temperature. Examples of a carrier compound can be methanol, ethanol, n-propanol or isopropanol alone or mixtures thereof.

Depending on the mode of application the resulting thicknesses of the coatings may differ in magnitude, the aim in principle being for coat thicknesses which are as low as possible. Thus, it is preferred for the coat thicknesses of the coating ultimately obtained to be between 0.0005 mm and 0.05 mm, in particular between 0.001 mm and 0.01 mm. As an example, 1 liter of final solution will be applied to 25 m² area. In this case the thickness d=1000/2500^{∗}2500=0.0016 mm.

The invention combines well known oligodynamic properties of silver nanoparticles with a photocatalytic action from a shell of TiO₂ doped with a metal. The shell increases the stability of the silver nanoparticles and prolongs the oligodynamic effect. The photocatalytic action is further improved by adding a gold nanoparticle to the nanoparticle composite. The gold nanoparticle will provide surface plasmon under the presence of electromagnetic radiation where conduction electrons oscillate in phase with the electric field of the electromagnetic radiation.

It will be apparent to those skilled in the art that various modifications and variations can be made without departing from the inventive concept. Other embodiments will be apparent to those skilled in the art from consideration of the specification and practice disclosed herein. It is intended that the specification and examples be considered as exemplary only, and that the claims be construed as encompassing all equivalents of the present invention which are apparent to those skilled in the art to which the invention pertains.

## Claims

1. An antimicrobial coating composition comprising a nanoparticle composite having a core and at least one shell, wherein
the core comprises a silver nanoparticle having an antimicrobial action;
the at least one shell is formed by a doped semiconductor providing a photocatalytic action and increasing the stability of silver nanoparticle core by controlling the releasing of Ag ions;
the nanoparticle composite comprises a nanoparticle of a noble metal providing surface plasmon under the presence of electromagnetic radiation.

2. The antimicrobial coating composition as claimed in claim 1, wherein the nanoparticle composite is dispersed in a binder material.

3. The antimicrobial coating composition as claimed in claim 1, wherein the silver nanoparticle core has an average diameter from 1 nm to 100 nm.

4. The antimicrobial coating composition as claimed in claim 1, wherein the material of the shell is TiO₂.

5. The antimicrobial coating composition as claimed in claim 1, wherein the shell is doped with a dopant from the group comprising a transition metal, a transition metal oxide, a transition metal hydroxide or a multivalent ion of a transition element.

6. The antimicrobial coating composition as claimed in claim 5, wherein the shell is doped with at least one dopant selected from the group consisting of copper and aluminium.

7. The antimicrobial coating composition as claimed in claim 6, wherein the dopant is a multivalent ion of copper (Cu+2) or aluminium (Au+3).

8. The antimicrobial coating composition as claimed in claim 5, wherein the dopant is 0.1-1 % of the shell material.

9. The antimicrobial coating composition as claimed in claim 1, wherein the noble metal nanoparticle is a gold nanoparticle.

10. The antimicrobial coating composition as claimed in claim 9, wherein the diameter of the noble metal nanoparticle is 10-100 nm.

11. The antimicrobial coating composition as claimed in claim 1, wherein the nanoparticle composite is provided in a binder from the group consisting of organosilane, PU, poly vinyl alcohol and acrylic coating.

12. The antimicrobial coating composition as claimed in claim 1 provided in a carrier compound.

13. The antimicrobial coating composition as claimed in claim 12, wherein said carrier compound comprises a solvent that has a lower boiling point than water.

14. The antimicrobial coating composition as claimed in claim 12, wherein said carrier compound comprises isopropanol.

15. A method for producing an antimicrobial coating composition, comprising
preparing a silver nanoparticle solution to form a silver nanoparticle core;
preparing a titanium isopropoxide (TTIP) solution for a TiO₂ shell of the silver nanoparticle core;
preparing a Cu++ dopant solution to provide a surface doping of said TiO₂ shell;
preparing a metallic gold nanoparticles solution;
generating a sol of doped TiO₂;
mixing said silver nanoparticle solution with said gold nanoparticle solution; and
adding mixture of said silver nanoparticle solution and said gold nanoparticle solution to sol of doped TiO_{2.}
